# EUROPÄISCHE PATENTSCHRIFT

(11) **EP 1 876 070 B1**
(45) Veröffentlichungstag und Bekanntmachung des Hinweises auf die Patenterteilung: **14.05.2014**
(21) Anmeldenummer: 07012439.1
(22) Anmeldetag: 26.06.2007
(51) Int. Cl.: B60R 21/213, B60R 21/215

(54) **Verkleidung für eine Säule eines Kraftfahrzeugs, insbesondere Verkleidung für die A-Säule eines PKW**
Trim for the column of a motor vehicle, in particular trim for the A-pillar of a motor car
Revêtement pour une colonne d'un véhicule automobile, en particulier revêtement pour la colonne A d'un véhicule automobile

(30) Priorität: 05.07.2006 DE 102006031108
(43) Veröffentlichungstag der Anmeldung: 09.01.2008
(73) Patentinhaber: GM Global Technology Operations LLC, Detroit, MI 48265-3000 (US)
(72) Erfinder: Glaser, Carsten, 64367 Mühltal (DE); Ziems, Stefan, 75173 Pforzheim (DE)
(74) Vertreter: Daniel, Ulrich W.P.

(56) Entgegenhaltungen:
- EP-A- 1 215 092
- WO-A-01/32474
- GB-A- 2 357 470
- US-A1- 2002 167 152

## Beschreibung

Die Erfindung betrifft eine Verkleidung für eine Säule eines Kraftfahrzeuges, insbesondere Verkleidung für die A-Säule eines PKW, wobei hinter der Verkleidung eine einen aufblasbaren Airbag aufweisende Schutzeinrichtung angeordnet ist, wobei beim Auslösen der Schutzeinrichtung und Aufblasen des Airbags eventuell in einem definierten Bereich der Verkleidung absplitternde Teile der Verkleidung von einem mit der Verkleidung verbundenen flächigen Element gehalten werden.

Eine Verkleidung der eingangs genannten Art, die bei einer A-Säule eines PKW Verwendung findet, ist aus der DE 297 20 619 U1 bekannt. Bei dieser ist der Airbag im zusammengefalteten Zustand zumindest hinter der A-Säulenverkleidung des Krafftfahrzeugs angeordnet. Um ein ungehindertes Austreten des Airbags zum Schutz des Fahrgastes zu ermöglichen, ist dort vorgesehen, dass die A-Säulenverkleidung aus einem biegesteifen Material besteht und eine im Wesentlichen in Längsrichtung der A-Säule verlaufende Schwenklinie aufweist, um die zumindest ein Verkleidungsabschnitt der A-Säulenverkleidung zur Freigabe eines Austrittsspaltes für den Airbag relativ zur A-Säule in Richtung Fahrgastraum schwenkbar ist. Es ist dadurch nicht notwendig, die A-Säulenverkleidung als ganzes von der A-Säule zu lösen, um ein Aufblasen des Airbags zu ermöglichen. Um eine optisch ansprechende Oberfläche der A-Säulenverkleidung zu gewährleisten und um die Biegesteifigkeit weiterhin zu unterstützen, ist ein Dekormaterial auf der Sichtseite der A-Säulenverkleidung aufkaschiert.

Aus der DE 101 64 210 A1 ist eine Innenverkleidung für Fahrzeuge, insbesondere für Türen, Seitenwände, Armaturen, Säulen und Holme in Kraftfahrzeugen, mit einem Aufprallschutz in Form eines Airbags bekannt. Der Airbag ist in einem im inaktiven Zustand von der Verkleidung überdeckten Austrittsbereich angeordnet und breitet sich beim Öffnen zielgerichtet durch den Austrittsbereich hindurch aus. Der Austrittsbereich der Verkleidung ist zweigeteilt und einerseits durch eine Bruchlinie und andererseits durch eine Biegelinie begrenzt, entlang welcher der den Austrittsbereich überdeckende Teil der Verkleidung zur Freigabe des Airbags schwenkbar gehalten ist. Im Bereich des Airbagaustritts ist die Verkleidung mit Dekoreinsätzen versehen. Innerhalb des jeweiligen Dekoreinsatzes liegt der Austrittsbereich. Jeder Dekoreinsatz weist einen Dekorträger auf, auf den unter Zwischenlage eines Schaumrückens eine Dekorhaut aufgebracht ist.

In der EP 0 723 893 A1 ist ein Kraftfahrzeug mit in einer Fahrzeugseitenwand angeordneten Seitenfenstern und einem Seitenairbag beschrieben. Dort ist die Fläche des Seitenfensters mit einer transparenten reißfesten Folie überdeckt. Die Folie ist an ihren Rändern mit dem Rahmen des Seitenfensters verbunden. Dadurch kann sich bei Aktivierung des Seitenairbags durch einen Crash der entfaltete Luftsack an der über die Öffnung des Seitenfensters gespannten Folie abstützen, auch wenn das Glas des Seitenfensters beim Crash zerbrochen ist.

Beim Auslösen einer Schutzeinrichtung und damit dem schlagartigen Aufblasen des Airbags besteht grundsätzlich die Gefahr, dass Teile der Verkleidung der Säule absplittern. Solches stellt dann keine Gefahr für die Insassen dar, wenn, wie es aus der Praxis bekannt ist, auf der Sichtseite der Säule, auf deren kompletten, den Insassen zugewandten Seite ein Stoff kaschiert ist. Wird nun der Airbag ausgelöst, halten eventuell absplitternde Teile an dem Stoff fest. - Eine derartige Verkleidung besitzt diverse Nachteile: So ist der Stoff auf der kompletten Säule aufzubringen, obwohl er in der Praxis nur partiell benötigt wird, nämlich nur dort wo erfahrungsgemäß Teile der Verkleidung absplittern. Es ergeben sich Mehrkosten einerseits durch die Produktkosten durch den Stoff selbst, die Zykluszeiterhöhung durch Aufbringung des Stoffs auf das Verkleidungsteil, schließlich eine Prozesserhöhung durch Beschneiden des Stoffs. Überdies sind höhere Anlagekosten für Stoffzufuhr und Beschnitt zu verzeichnen. Schließlich besitzt die Verkleidung aufgrund der Stöffkaschierung ein höheres Gewicht.

Aus der WO 01/32474 A ist eine Verkleidung für eine A-Säule des Fahrzeuges bekannt, wobei der obere Bereich der Verkleidung einen zwischen dieser und der A-Säule angeordneten Endabschnitt eines Airbags abdeckt und der untere Bereich der Verkleidung ein Seil abdeckt, das am Airbag angreift und diesen unten hält. Beim Auslösen des Airbags treten dieser und das Seil zwischen der A-Säule und der Verkleidung aus, von der Windschutzscheibe weg. Im Bereich der gesamten Innenfläche der Verkleidung, somit der A-Säule zugewandten Fläche der Verkleidung ist mit dieser ein Klebekissen verklebt. Durch die Verbindung von Verkleidung und Klebekissen kann ein Brechen der Verkleidung minimiert werden, wenn bei einem Überschlag oder einem Seitenaufprall-Zusammenstoß des Fahrzeuges mit hoher Schwere sich ein Fahrzeuginsasse unter Zwang in die Seite des Fahrzeuges bewegt und durch dessen Einwirkung die Verkleidung bricht.

Aufgabe der vorliegenden Erfindung ist es, eine Verkleidung der eingangs genannten Art so weiterzubilden, dass beim Auslösen des Airbags keine Absplitterungen in den Fahrgastraum gelangen, wobei die Verkleidung besonders einfach und besonders kostengünstig herstellbar sein soll, und überdies gegenüber herkömmlichen Verkleidungen ein geringes Gewicht aufweist.

Gelöst wird die Aufgabe durch eine Verkleidung der eingangs genannten Art, wobei erfindungsgemäß vorgesehen ist, dass die Verkleidung auf deren dem Airbag zugewandten Seite mit dem flächigen Element versehen ist, wobei dieses Element als klebende Folie ausgebildet ist, die nur in dem definierten Bereich der Verkleidung angeordnet ist.

Bei der erfindungsgemäßen Verkleidung ist somit keine Kaschierung der Verkleidung auf der den Insassen zugewandten Seite erforderlich. Eventuell beim Aufblasen des Airbags absplitternde Teile der Verkleidung werden mittels der selbstklebenden Folie gehalten, die einerseits nur in dem dem Airbag zugewandten Bereich der Verkleidung angebracht wird und andererseits nur partiell vorgesehen ist, nämlich nur in dem definierten Bereich der Verkleidung, in dem beim Auslösen der Schutzeinrichtung und Aufblasen des Airbags mit den Absplitterungen zu rechnen ist. Der definierte Bereich wird durch Versuche ermittelt. Es handelt sich um einen Teilbereich der Verkleidung benachbart dem Airbag. Da sich der Airbag insbesondere in dem Bereich der Verkleidung der Säule, der dem Dachhimmel des Fahrzeuges zugewandt ist, befindet, ist die Folie vorzugsweise benachbart dem Dachhimmel des Fahrzeugs an der Verkleidung der Säule angebracht.

Gemäß einer besonderen Ausführungsform der Erfindung ist vorgesehen, dass die Verkleidung aus Kunststoff besteht. Es ist demnach nicht erforderlich, ergänzende Herstellungsvorgänge betreffend die Verkleidung vorzusehen, insbesondere keine Kaschierung vorzunehmen. Die Verkleidung besteht ausschließlich aus Kunststoff, wobei es durchaus möglich ist und als zweckmäßig angesehen wird, beim Herstellen der Kunststoff-Verkleidung auf der dem Insassen zugewandten Sichtseite eine Narbung und/oder Pigmentierung vorzusehen. Die Gestaltung der Verkleidung auf deren Sichtseite erfolgt somit beim Herstellungsprozess, womit keine zusätzlichen Kosten verursachenden Produktionsschritte, insbesondere im Zusammenhang mit einer Kaschierung der Sichtseite, erforderlich sind.

Der Airbag ist insbesondere als so genannter Curtain-Airbag ausgebildet. Bei einer Wahl eines solchen Airbags lässt sich der Bereich der Verkleidung, in dem eine Absplitterung zu erwarten ist, besonders präzise definieren.

Die Folie, die mit der Verkleidung verbunden wird, hat insbesondere eine rechteckige Gestalt. Sie erstreckt sich nur über einen recht kurzen Abschnitt der Verkleidung, bezogen auf die Längserstreckung der Säule.

Bevorzugte Weiterbildungen der Erfindung ergeben sich aus den abhängigen Unteransprüchen und der nachfolgenden Beschreibung.

Nachfolgend wird ein Ausführungsbeispiel der Erfindung, ohne hierauf beschränkt zu sein, unter Bezugnahme auf die Zeichnung näher erläutert. Es zeigt:

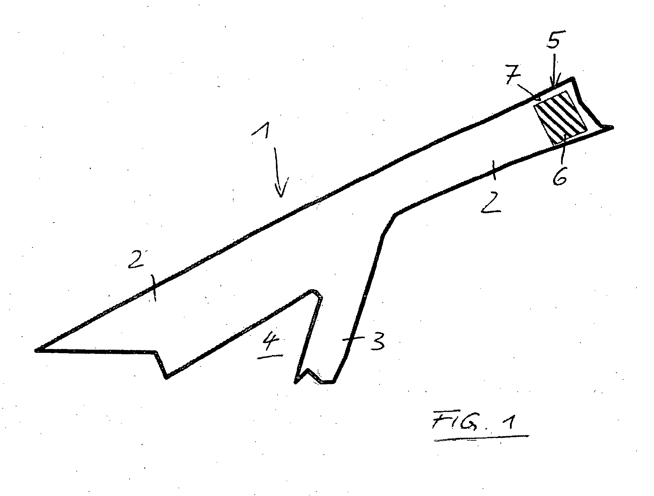

- Figur 1: eine Ansicht einer teilweise dargestellten Verkleidung, gesehen auf die dem Airbag zugewandte Seite, wobei die Verkleidung im Bereich ihres dem Dachhimmel zugewandten Endes mit einer selbstklebenden Folie versehen ist.

Veranschaulicht ist in der Figur die Verkleidung 1 für die A-Säule eines PKW, wobei die Verkleidung auch dem Verkleiden eines Rahmenabschnittes eines unten im Bereich der A-Säule angeordneten, etwa dreiecksförmigen Fensters dient. Demzufolge ist zwischen dem durchlaufenden Verkleidungsabschnitt 2 und dem abzweigenden Verkleidungsabschnitt 3 ein freier Winkelausschnitt 4 gebildet, im Bereich dessen das kleine Seitenfenster angeordnet ist.

Die Figur veranschaulicht die Innenseite der Verkleidung 1, somit die Seite, die dem auszulösenden Airbag zugewandt ist. Dieser Airbag ist nicht veranschaulicht und im Bereich des oberen Endes 5 der Verkleidung hinter dieser platziert. Das obere Ende der Verkleidung 1 ist abgebrochen dargestellt, genauso wie das untere Ende der Verkleidung im Bereich des durchlaufenden Verkleidungsabschnitts 2 bzw. des abzweigenden Verkleidungsabschnitts 3.

Durch Versuche ist ermittelt worden, in welchem Bereich 7 der Verkleidung 1 beim Aufblasen des Luftsacks Absplitterungen der Verkleidung 1 auftreten können. In diesem definierten Bereich 7 ist auf der dem Airbag zugewandten Seite der Verkleidung 1 ein flächiges Element 6 mit diesem verbunden, das als selbstklebende Folie ausgebildet ist. Splittert die Verkleidung 1 beim Aktivieren des Airbags im Bereich der selbstklebenden Folie 6, halten die abgesplitterten Teile an der selbstklebenden Folie fest, wodurch eine Gefährdung der Fahrzeuginsassen ausgeschlossen ist.

Die Folie 6 ist demnach im nicht sichtbaren Bereich der Verkleidung 1 geklebt und überdies nur partiell vorhanden. Es ergibt sich hierdurch bei der Verkleidung 1 eine Gewichtsersparnis und überdies eine Kostenersparnis. Produktkosten und Investmentkosten können reduziert werden.

Aufgrund der Ausbildung der Verkleidung 1 mit der selbstklebenden Folie 6 auf der dem Airbag zugewandten Seite der Verkleidung 1 ist es möglich, die Verkleidung ausschließlich aus Kunststoff herzustellen, gegebenenfalls, aus optischen Gründen, die Verkleidung 1 auf der dem Airbag abgewandten Seite mit einer Narbung und/oder Pigmentierung zu versehen.

Die Folie 6 ist an der Verkleidung 1 in einem Bereich der Verkleidung 1 angebracht, der benachbart dem Dachhimmel des Fahrzeugs angeordnet ist. Der Airbag ist beispielsweise als Curtain-Airbag ausgebildet.

### Bezugszeichenliste

- Verkleidung: 1
- durchlaufender Verkleidungsabschnitt: 2
- abzweigender Verkleidungsabschnitt: 3
- freier Winkelabschnitt: 4
- oberes Ende: 5
- selbstklebende Folie: 6
- definierter Bereich: 7

## Patentansprüche

1. Verkleidung (1) für eine Säule eines Kraftfahrzeuges, insbesondere Verkleidung (1) für die A-Säule eines Personenkraftwagens, wobei hinter der Verkleidung (1) eine einen aufblasbaren Airbag aufweisende Schutzeinrichtung angeordnet ist, wobei beim Auslösen der Schutzeinrichtung und Aufblasen des Airbags eventuell in einen definierten Bereich (7) der Verkleidung absplitternde Teile der Verkleidung von einem mit der Verkleidung (1) verbundenen flächigen Element (6) gehalten werden, **dadurch gekennzeichnet, dass** die Verkleidung (1) auf deren dem Airbag zugewandten Seite mit dem flächigen Element (6) versehen ist, wobei dieses Element (6) als selbstklebende Folie ausgebildet ist, die nur in dem definierten Bereich (7) der Verkleidung (1) angeordnet ist.

2. Verkleidung nach Anspruch 1, **dadurch gekennzeichnet, dass** sie aus Kunststoff besteht.

3. Verkleidung nach Anspruch 2, **dadurch gekennzeichnet, dass** die dem Airbag abgewandte Seite der Verkleidung (1) eine Narbung und/oder Pigmentierung aufweist.

4. Verkleidung nach einem der Ansprüche 1 bis 3, **dadurch gekennzeichnet, dass** der Airbag als Curtain-Airbag ausgebildet ist.

5. Verkleidung nach einem der Ansprüche 1 bis 4, **dadurch gekennzeichnet, dass** die Folie (6) an der Verkleidung (1) in einem Bereich der Verkleidung (1), der benachbart dem Dachhimmel des Fahrzeuges angeordnet ist, angebracht ist.

## Claims

1. A trim (1) for a column of a motor vehicle, especially the trim (1) for the A-pillar of a motor car, wherein a protective device having an inflatable airbag is arranged behind the trim (1), wherein parts of the trim, which may splinter off in a defined region (7) of the trim during the release of the protective device and inflation of the airbag, are held by a flat element (6) connected to the trim (1), **characterized in that** the trim (1), on its side facing the airbag, is provided with a flat element (6), wherein said element (6) is arranged as a self-adhesive foil which is only arranged in a defined region (7) of the trim (1).

2. A trim according to claim 1, **characterized in that** it consists of plastic.

3. A trim according to claim 2, **characterized in that** the side of the trim (1) facing away from the airbag comprises scarring and/or pigmentation.

4. A trim according to one of the claims 1 to 3, **characterized in that** the airbag is arranged as a curtain airbag.

5. A trim according to one of the claims 1 to 4, **characterized in that** the foil (6) is arranged on the trim (1) in a region of the trim (1) which is arranged adjacent to the roof liner of the vehicle.

## Revendications

1. Habillage (1) pour un montant d'un véhicule à moteur, en particulier habillage (1) pour le montant A d'une voiture automobile, dans lequel un dispositif de protection comprenant un coussin gonflable de protection est disposé derrière l'habillage (1), dans lequel les morceaux de l'habillage qui se fragmentent dans une zone définie (7) de l'habillage lors du déclenchement du dispositif de protection et du gonflage du coussin gonflable de protection sont retenus par un élément de surface (6) relié à l'habillage (1), **caractérisé en ce que** l'habillage est muni de l'élément de surface (6) sur sa face tournée vers le coussin gonflable de protection, cet élément (6) étant conçu comme un film autocollant qui est disposé seulement dans la zone définie (7) de l'habillage (1).

2. Habillage selon la revendication 1, **caractérisé en ce qu'**il se compose de matière plastique.

3. Habillage selon la revendication 2, **caractérisé en ce que** le côté de l'habillage (1) tourné à l'opposé du coussin gonflable de protection présente une texture et/ou une pigmentation.

4. Habillage selon l'une des revendications 1 à 3, **caractérisé en ce que** le coussin gonflable de protection est conformé comme un rideau gonflable de protection.

5. Habillage selon l'une des revendications 1 à 4, **caractérisé en ce que** le film (6) est disposé sur l'habillage (1) dans une zone de l'habillage (1) qui est disposée au voisinage du ciel de toit du véhicule.
